# EUROPEAN PATENT APPLICATION

(11) **EP 3 981 621 A1**
(43) Date of publication of application: **13.04.2022**
(21) Application number: 20805609.3
(22) Date of filing: 21.04.2020
(51) Int. Cl.: B60H 1/00, B60H 1/32

(54) **VEHICULAR AIR-CONDITIONING DEVICE**

(30) Priority: 10.05.2019 JP 2019089439
(71) Applicant: Valeo Japan Co., Ltd., Kumagaya-Shi SAITAMA 360-0193 (JP)
(72) Inventor: SAKURAI, Yusaku, Kumagaya-shi Saitama 360-0193 (JP); NAGANO, Hideki, Kumagaya-shi Saitama 360-0193 (JP); IZUMIKAWA, Shiro, Kumagaya-shi Saitama 360-0193 (JP); YOSHIZAKI, Hisayoshi, Kumagaya-shi Saitama 360-0193 (JP)
(74) Representative: Valeo Systèmes Thermiques
(86) International application number: PCT/JP2020/017200
(87) International publication number: WO 2020/230548

(57) **Abstract**

[Problem] To provide a vehicle air conditioning device which, while being small in size, can lead air to the whole of a heat exchanger.

[Means for Resolution] A vehicle air conditioning device (10; 10A; 10B) has a casing (20) configuring a temperature adjustment section (12; 12A; 12B). The casing (20) has provided in a position thereof opposed to an inflow surface (41) of a heat exchanger (40) a flow direction change section (30) which causes the flow direction of air led to the temperature adjustment section (12; 12A; 12B) from a duct section (13; 13A; 13B) to bend approximately 90 degrees and leads the air to the inflow surface (41). Guide portions (60, 70; 60A, 70A; 60B) smaller in area than the flow direction change section (30) as seen when directly facing the inflow surface (41) are provided in a heat exchanger upstream space (22) between the inner wall surface of the casing (20) and the inflow surface (41).

## Description

### Technical Field

The present invention relates to a vehicle air conditioning device for adjusting the temperature of a vehicle interior to a predetermined temperature.

### Background Art

To adjust the temperature of a vehicle interior to a predetermined temperature, a vehicle has mounted therein a vehicle air conditioning device. As a heretofore known technology on the vehicle air conditioning device, there is a technology disclosed in PTL 1.

A vehicle air conditioning device disclosed in PTL 1 is such that a flow direction change section which causes the flow direction of air led to a temperature adjustment section from a duct section to bend approximately 90 degrees and leads the air to a heat exchanger is formed in steps on a casing. The air can be led toward the heat exchanger by the flow direction change section. In addition, as the casing is formed in steps, it contributes especially to a reduction in the size of the casing at a downstream side of the casing.

Also, a vehicle air conditioning device disclosed in PTL 2 is such that a plurality of guide portions which lead air led from a duct section to a heat exchanger are provided between the inner wall surface of a casing and the heat exchanger. The guide portions are provided, thereby enabling the air to flow to the whole of the heat exchanger.

### Citation List

### Patent Literature

PTL 1: JP-A-2018-203063 (Fig. 5)
PTL 2: JP-A-2009-143338 (Fig. 2)

### Summary of Invention

### Technical Problem

In the meantime, according to the vehicle air conditioning device of PTL 1, the flow path direction changes significantly, so that it is difficult, in a portion on the upstream side of the flow direction change section, to lead the air to the heat exchanger. That is, it is difficult to homogenize the volume of air passing through the heat exchanger.

On the other hand, according to the vehicle air conditioning device of PTL 2, the air can be led to the whole of the heat exchanger, but the casing cannot be reduced in size by being formed in steps as in PTL 1, resulting in an increase in the size of the casing. The increase in the size of the casing leads to an increase in the size of the whole vehicle air conditioning device.

The present invention has a problem of providing a vehicle air conditioning device which, while being small in size, can homogenize the volume of air passing through a heat exchanger.

### Solution to Problem

In the following description, the reference signs in the accompanying drawings are added in parentheses to facilitate understanding of the present invention, but thereby the present invention is not limited to the illustrative embodiments.

According to the present invention, provided is a vehicle air conditioning device including
a blower section (11; 11B) which blows air;
a temperature adjustment section (12; 12A; 12B) in which a heat exchanger (40) which heats or cools the air blown in from the blower section (11; 11B) is housed in a casing (20; 20B); and
a duct section (13; 13A; 13B) which leads the air to the temperature adjustment section (12; 12A; 12B) from the blower section (11), wherein the device is characterized in that
the heat exchanger (40), including an inflow surface (41) positioned on the upstream side with reference to the flow direction of the air, carries out heat exchange with the air when the air having flowed in from the inflow surface (41) passes through the heat exchanger (40), that
the casing (20; 20B) has in a position thereof opposed to the inflow surface (41) a flow direction change section (30) which causes the flow direction of the air led to the temperature adjustment section (12; 12A; 12B) from the duct section (13; 13A; 13B) to bend approximately 90 degrees and leads the air to the inflow surface (41), and that
guide portions (60, 70; 60A, 70A; 60B) smaller in area than the flow direction change section (30) as seen when directly facing the inflow surface (41) is provided in a heat exchanger upstream space (22) between the inner wall surface of the casing (20; 20B) and the inflow surface (41).

It is preferable that the casing (20) is configured of an upper casing (20a) and a lower casing (20b) positioned below the upper casing (20a), that
a partition board (50; 50A) which partitions at least one portion of the heat exchanger upstream space (22) into an upper and a lower portion is provided between the upper casing (20a) and the lower casing (20b), and that
the guide portions (60, 70; 60A, 70A) are erected so as to extend in the up and down direction from an upper surface (51b; 51Ab) and/or a lower surface (51a; 51Aa) of the partition board (50; 50A).

It is preferable that the duct section (13) is connected to the upper casing (20a) and the lower casing (20b), that
a lower bottom surface (13a) of the duct section (13) is configured having an upward gradient when seen with reference to the flow direction of the air flowing through the duct section (13), and that
the guide portions (60, 70) include a first guide (60) fixed to the lower surface (51a) of the partition board (50) .

It is preferable that the duct section (13) is connected to the upper casing (20a) and the lower casing (20b), that
a ceiling surface (13b) of the duct section (13) is configured having an upward gradient when seen with reference to the flow direction of the air flowing through the duct section (13), and the partition board (50) is configured having a gentler gradient than the ceiling surface (13b), and that
the guide portions (60, 70) include a second guide (70) fixed to the upper surface (51b) of the partition board (50) .

It is preferable that the duct section (13A) is connected to the upper casing (20a) and the lower casing (20b), that
a ceiling surface (13Ab) of the duct section (13A) is configured having a downward gradient when seen with reference to the flow direction of the air flowing through the duct section (13A), and that
the guide portions (60A, 70A) include a first guide (60A) fixed to the upper surface () of the partition board (50A).

It is preferable that the duct section (13A) is connected to the upper casing (20a) and the lower casing (20b), that
a lower bottom surface (13Aa) of the duct section (13A) is configured having a downward gradient when seen with reference to the flow direction of the air flowing through the duct section (13A), and the partition board (50A) is configured having a gentler gradient than the lower bottom surface (13Aa), and that
the guide portions (60A, 70A) include a second guide (70A) fixed to the lower surface (51Aa) of the partition board (50A) .

It is preferable that the flow direction change section (30) has a plurality of step portions (31) formed in steps, and that
at least one portion of the guide portions (60, 70; 60A, 70A; 60B) is positioned on the upstream side of the plurality of step portions (31) when seen with reference to the flow direction of the air flowing through the duct section (13; 13A; 13B) .

### Advantageous Effects of Invention

In the present invention, the casing has the flow direction change section which causes the flow direction of air led to the temperature adjustment section from the duct section to bend approximately 90 degrees and leads the air to the inflow surface of the heat exchanger. Also, the guide portions are provided in the heat exchanger upstream space between the inner wall surface of the casing and the inflow surface of the heat exchanger. The guide portions are smaller in area than the flow direction change section as seen when directly facing the inflow surface. That is, it is arranged that, while using the casing having the flow direction change section, the guide portions are provided in a small region relative to the flow direction change section. The casing can be reduced in size by using the casing having the flow direction change section. In addition, the guide portions are provided, thereby enabling more air to be led to the whole inflow surface of the heat exchanger. At this time, an increase in the size of the casing can be prevented by reducing the region in which to provide the guide portions. For this reason, it is possible to provide the vehicle air conditioning device wherein although it is small in size, air is led to the whole heat exchanger, thus homogenizing the volume of air passing through the heat exchanger.

### Brief Description of Drawings

[Fig. 1] Fig. 1 is a perspective view of a vehicle air conditioning device according to Working Example 1.
[Fig. 2] Fig. 2 is a main portion exploded perspective view of the vehicle air conditioning device shown in Fig. 1.
[Fig. 3] Fig. 3 is a sectional view taken along the line III-III of Fig. 1.
[Fig. 4] Fig. 4 is a sectional view taken along the line IV-IV of Fig. 3.
[Fig. 5] Fig. 5 is a view describing a modification example of the vehicle air conditioning device shown in Fig. 3.
[Fig. 6] Fig. 6 is a main portion sectional view of a vehicle air conditioning device according to Working Example 2.
[Fig. 7] Fig. 7 is a perspective view showing a partition board, a first guide, and a second guide which are shown in Fig. 6.
[Fig. 8] Fig. 8 is a side view of a vehicle air conditioning device according to Working Example 3.
[Fig. 9] Fig. 9 is a sectional view taken along the line IX-IX of Fig. 8.

### Description of Embodiments

A description will hereinafter be given, based on the accompanying drawings, of the embodiments of the present invention. In the drawings, Fr indicates front with reference to the direction of forward movement of a vehicle; Rr, rear with reference to the direction of forward movement of the vehicle; Le, left with reference to an occupant of the vehicle; Ri, right with reference to the occupant of the vehicle; Up, up; and Dn, down.

### <Working Example 1>

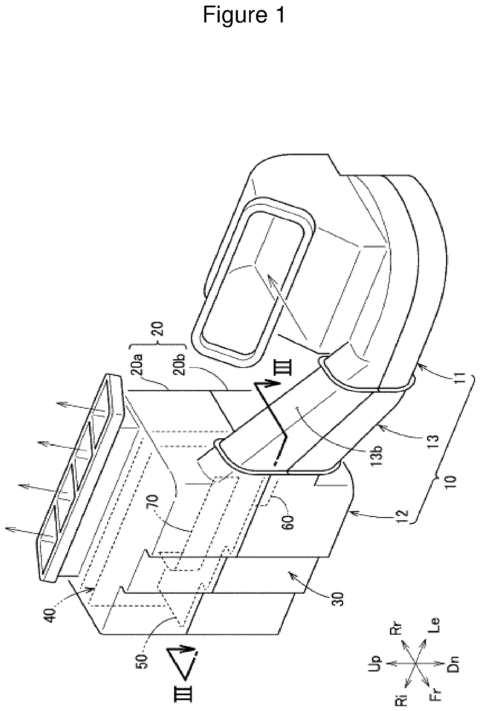

Fig. 1 will be referred to. A vehicle air conditioning device 10 (hereinafter abbreviated to the "air conditioning device 10") which adjusts the temperature of a vehicle interior is mounted in, for example, a passenger car. The air conditioning device 10 is disposed so as to extend approximately in the left and right direction in the front of the vehicle interior.

The air conditioning device 10 has a blower section 11 which blows intake air, a temperature adjustment section 12 which carries out the adjustment of the temperature of the air blown in from the blower section 11 and discharges the air into the vehicle interior, and a duct section 13 which leads the air to the temperature adjustment section 12 from the blower section 11.

A not-shown impeller and motor is housed in the blower section 11. The impeller is caused to rotate by driving the motor, and thereby air inside and/or outside the vehicle interior is taken into the blower section 11. The air taken in the blower section 11 is supplied to the temperature adjustment section 12 via the duct section 13.

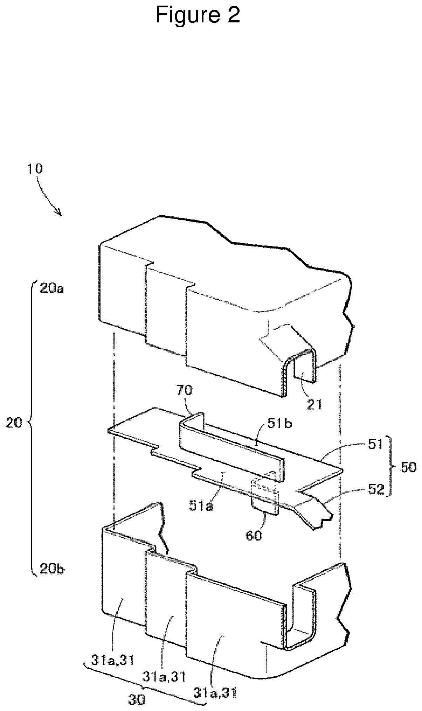

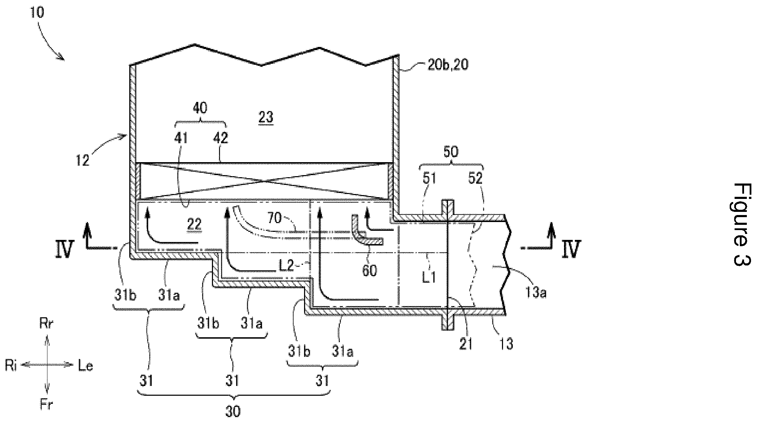

Figs. 2 and 3 will be referred to. The temperature adjustment section 12 has a casing 20, a heat exchanger 40 which is housed inside the casing 20, and which carries out heat exchange with the air discharged from the duct section 13, a partition board 50 which is provided in the casing 20, and which partitions the inside of the casing 20 into an upper and a lower portion, a first guide 60 (a guide portion 60) which is fixed to the lower surface of the partition board 50, and which guides the air toward the heat exchanger 40, and a second guide 70 (a guide portion 70) which is fixed to the upper surface of the partition board 50, and which guides the air toward the heat exchanger 40.

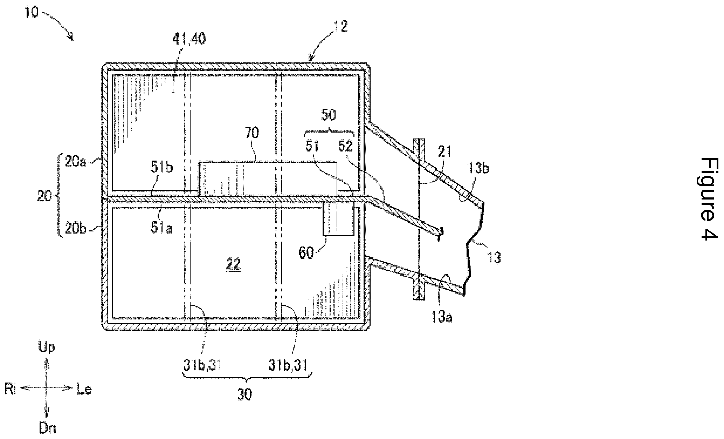

Figs. 1 and 4 will be referred to. The duct section 13 is disposed in an upward gradient toward the temperature adjustment section 12 from the blower section 11. To describe in more detail, a lower bottom surface 13a of the duct section 13 is formed in an upward gradient in the air flow direction. Also, a ceiling surface 13b of the duct section 13 is also formed in an upward gradient in the air flow direction.

Figs. 2 and 3 will be referred to. The internal space of the casing 20 can be divided, with respect to the air flow direction, into a heat exchanger upstream space 22, which is a region on the upstream side of the heat exchanger 40 from an air inlet 21 through which to let in the air, and a heat exchanger downstream space 23 which is a region on the downstream side of the heat exchanger 40. The front of the casing 20 includes a flow direction change section 30 which leads the air let in from the left side toward the rear. The flow direction change section 30 is substantially a portion of the casing 20 opposed to the heat exchanger 40.

In what follows, when mentioning "upstream", it refers to upstream with reference to the air flow direction, and when mentioning "downstream", it refers to downstream with reference to the air flow direction.

The casing 20 is formed of an upper and a lower casing 20a and 20b which are both made from resin, and is formed having the upper casing 20a superposed on the lower casing 20b. The previously described air inlet 21, heat exchanger upstream space 22, heat exchanger downstream space 23, and flow direction change section 30 are each formed by both the upper casing 20a and the lower casing 20b.

The flow direction change section 30 is configured so that the downstream side thereof is in a more rearward position than the upstream side. Specifically, it is preferable that a plurality of step portions 31 are formed as shown in Fig. 3.

The step portions 31 are each formed of a plane portion 31a approximately parallel to the heat exchanger 40 and a wall portion 31b extending toward the heat exchanger 40 from the plane portion 31a. The angles which the wall portions 31b make with the respective plane portions 31a, being greater than 90 degrees, are appropriately set by considering the distribution of the volume of air passing through the heat exchanger 40 and the airflow resistance of the air conditioning device 10. Fig. 3 shows, as an example, a configuration wherein the angles of the wall portions 31b with the respective plane portions 31a are all approximately 90 degrees. The air let into the casing 20 from the duct section 13 is guided so that its flow direction is changed toward the heat exchanger 40 by the respective wall portions 31b.

The flow direction change section 30 can adopt any arbitrary form. For example, a configuration may be such that the angle which each of the wall portions 31b make with its corresponding plane portion 31a is relatively small on the upstream side and that the nearer to the downstream side, the relatively greater the angle is.

The heat exchanger 40 has an inflow surface 41 which is an upstream side surface and through which air flows in and a discharge surface 42 through which to discharge the air having flowed in from the inflow surface 41. The air having flowed in from the inflow surface 41 is heat exchanged in the heat exchanger 40 and discharged through the discharge surface 42 into the heat exchanger downstream space 23.

Figs. 2 and 4 will be referred to. The partition board 50 has a partition board main body portion 51 positioned inside the casing 20 and a partition board extension portion 52 which extends to the inside of the duct section 13 from the partition board main body portion 51.

The partition board main body portion 51 is provided between the upper casing 20a and the lower casing 20b. That is, the partition board main body portion 51 is disposed along the border between the upper casing 20a and the lower casing 20b. The partition board main body portion 51 has a form conforming to the inner wall surface of the casing 20.

One portion of the partition board extension portion 52 is positioned inside the duct section 13. The partition board extension portion 52 is formed in a downward gradient toward the blower section 11 (refer to Fig. 1). The partition board extension portion 52 is gentler in gradient than the ceiling surface 13b of the duct section 13.

The first guide 60 is fixed to a lower surface 51a of the partition board main body portion 51, and the second guide 70 is fixed to the upper surface of the partition board main body portion 51. The first guide 60 and the second guide 70 each are provided erected on the partition board main body portion 51, and have an approximately L shape in plan view.

Fig. 3 will be referred to. It is preferable that the first guide 60 and the second guide 70 are each disposed in a portion closer to the inflow surface 41 than to the plane portion 31a closest to the inflow surface 41 (the plane portion 31a on the most downstream side) out of the plurality of plane portions 31a (refer to the extended line L1). In other words, it is preferable that the first guide 60 and the second guide 70 are each disposed in a portion closer to the heat exchanger 40 than to the plane portion 31a closest to the heat exchanger 40. Because of this, it is possible to suppress an increase in the size of the casing 20.

The first guide 60 is disposed in a portion closer to the air inlet 21 than to the wall portion 31b closest to the air inlet 21 (the wall portion 31b on the most downstream side) out of the plurality of wall portions 31b (refer to the extended line L2). Because of this, one portion of the air having flowed through the duct section 13 is changed in flow direction, on the upstream side before it arrives the wall portion 31b (that is, on a side of the heat exchanger 40 adjacent to the duct section 13), so as to be directed toward the heat exchanger 40 by the first guide portion 60.

Fig. 4 will be referred to. As is seen when directly facing the inflow surface 41, an area of a region in which are provided the first guide 60 and the second guide 70 is smaller than the area of the flow direction change section 30.

More preferably, the area of the region in which are provided the first guide 60 and the second guide 70 is preferably smaller than an area of a region in which the first guide 60 and the second guide 70 are not provided. The advantageous effect of changing the air flow direction, which is produced by the flow direction change section 30, cannot be obtained in the region in which are provided the first guide 60 and the second guide 70, but the area of the first and second guides 60 and 70 is made small in this way, and thereby it is possible to limit a decrease in the same effect obtained by the flow direction change section 30.

Fig. 3 will be referred to. One portion of the air let in from the air inlet 21 is guided so that its flow direction is changed toward an arbitrary portion of the heat exchanger 40 by the first guide 60 and the second guide 70. The remaining portion of the air let in from the air inlet 21 is guided so that its flow direction is changed toward the heat exchanger 40 by the individual step forms of the flow direction change section 30.

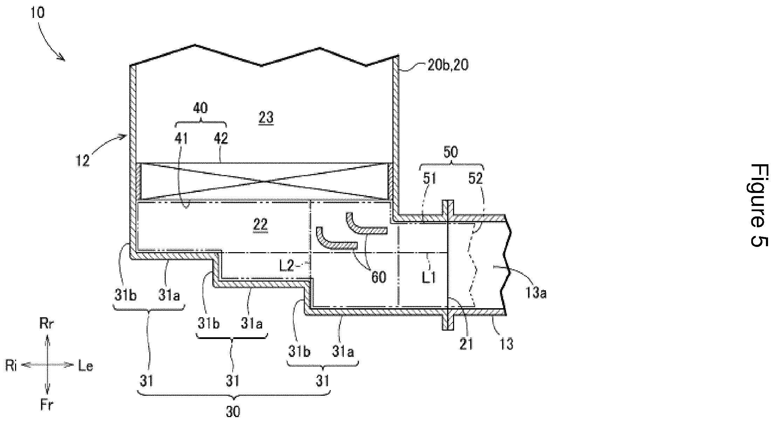

Fig. 5 will be referred to. As shown in Fig. 5, it is also possible to dispose a plurality of the first guides 60. That is, it is also possible to configure guide members 60 only of the first guides 60 and thus to provide the plurality of first guides 60. In this case, it is preferable that all the first guides 60 are disposed in their respective portions closer to the inflow surface 41 than to the plane portion 31a. Furthermore, it is preferable that all the plurality of first guides 60 are disposed in their respective portions closer to the air inlet 21 than to the wall portion 31b.

The second guide 70 (refer to Fig. 4) can also be pluralized as needed. It is also possible to configure guide members 70 only of the second guides and thus to provide a plurality of the second guides. At this time, it is preferable that all the second guides 70 are disposed in their respective portions closer to the inflow surface 41 than to the plane portions 31a.

The air conditioning device 10 described above produces the following advantageous effects.

Figs. 3 and 4 will be referred to. The casing 20 has the flow direction change section 30 which causes the flow direction of the air led to the temperature adjustment section 12 from the duct section 13 to bend approximately 90 degrees and leads the air to the inflow surface 41 of the heat exchanger 40. Also, the first guide 60 and the second guide 70 are provided in the heat exchanger upstream space 22 between the inner wall surface of the casing 20 and the inflow surface 41 of the heat exchanger 40. The first guide 60 and the second guide 70 are smaller in area than the flow direction change section 30 as seen when directly facing the inflow surface 41. That is, a configuration is such as, while using the casing 20 having the flow direction change section 30, to provide the first guide 60 and the second guide 70 in a small region relative to the flow direction change section 30. It is possible, by using the casing 20 having the flow direction change section 30, to reduce the size of the casing 20. In addition, the first guide 60 and the second guide 70 are provided, thereby enabling more air to be led to the entire inflow surface 41 of the heat exchanger 40. At this time, the region in which are provided the first guide 60 and the second guide 70 is reduced in area, and thereby it is possible to prevent an increase in the size of the casing 20. For this reason, it is possible to provide the vehicle air conditioning device 10 which, while being small in size, can homogenize the volume of air passing through the heat exchanger 40.

Furthermore, the first guide 60 and the second guide 70 are erected so as to extend in the up and down direction, from the upper and lower surfaces 51b and 51a of the partition board 50, respectively. For example, it is possible to fix the first guide 60 and the second guide 70 in advance to the partition board 50 and then to fix the partition board 50 to the casing 20. This is a preferable configuration in providing the first guide 60 and the second guide 70 in the heat exchanger upstream space 22 between the inner wall surface of the casing 20 and the inflow surface 41. As described above, the same advantageous effects can also be obtained when the guide members 60, 70 are configured only of the first guides 60 or the second guides 70.

The lower bottom surface 13a of the duct section 13 is configured in an upward gradient in the air flow direction. The air having flowed along the duct section 13 flows not only in the left and right direction but upward. This is because the air comes into contact with the lower surface 51a of the partition board 50 and it is difficult for the air to flow to the lower portion of the lower casing 20b. Here, the first guide 60 is provided in a portion of the lower surface 51a of the partition board 50 adjacent to the duct section 13, and thereby a change in the air flow direction can be smoothly carried out in a region of the heat exchanger upstream air 22, especially, below the partition wall 50.

The ceiling surface 13b of the duct section 13 is configured having an upward gradient, and the partition board 50 is configured having a gentler gradient than the ceiling surface 13b. When the ceiling surface 13b of the duct section 13 is formed having an upward gradient toward the casing 20, it is difficult for the air flow direction to change toward the heat exchanger 40, especially, in a space adjacent to the upper surface of the partition board 50, but the second guide 70 is provided in this kind of portion, and thereby a change in the air flow direction can be smoothly carried out in a region of the heat exchanger upstream space 22, especially, above the partition wall 50.

The first guide 60 is positioned on the upstream side of the plurality of step portions 31. That is, at least one portion of the first and second guides 60 and 70 is positioned on the upstream side of the plurality of step portions 31. The air having flowed out from the duct section 13 is changed in the air flow direction toward the heat exchanger 40 by the step portions 31 provided on the casing 20. Here, at least one portion of the first and second guides 60 and 70 is provided on the upstream side of the step portions 31, thereby enabling the flow direction of one portion of the air to be changed toward the heat exchanger 40 even before it arrives the step portions 31, and it is possible to homogenize the distribution of the volume of air flowing through the heat exchanger 40.

### <Working Example 2>

Next, a description will be given, based on the drawings, of an air conditioning device 10A according to Working Example 2.

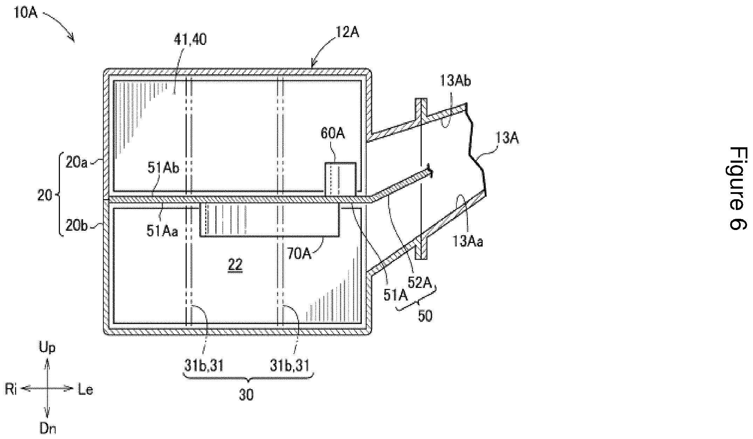

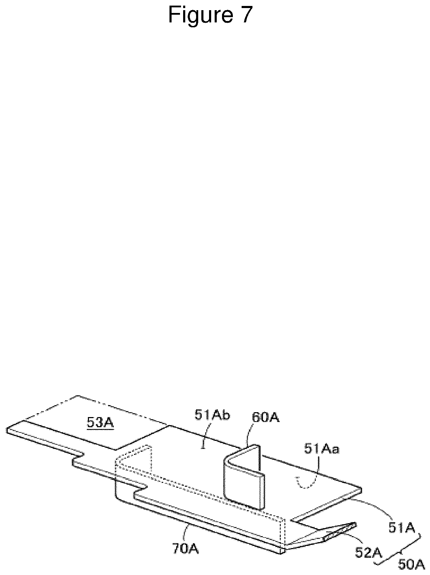

Figs. 6 and 7 will be referred to. The air conditioning device 10A according to Working Example 2 is different in the direction, in which a duct section 13A is oriented, from the air conditioning device 10 (refer to Fig. 1) according to Working Example 1. Because of this, the positions to which a first guide 60A and a second guide 70A are fixed are also different. Also, the form of a partition board 50A is different. The other basic configurations are common to those of the air conditioning device 10 according to Working Example 1. The same signs will be used for portions common to those in Working Example 1, and a detailed description thereof will be omitted.

The duct section 13A is formed in a downward gradient in the air flow direction. To describe in more detail, a lower bottom surface 13Aa of the duct section 13A is formed in a downward gradient in the air flow direction. Also, a ceiling surface 13Ab of the duct section 13A is also formed in a downward gradient in the air flow direction.

The partition board 50A has a partition board main body portion 51A positioned inside the casing 20 and a partition board extension portion 52A which extends to the inside of the duct section 13 from the partition board main body portion 51A.

One portion of the partition board main body portion 51 is formed unfilled (refer to Fig. 7), and the other portion has a form conforming to the inner wall surface of the casing 20. The portion formed unfilled is referred to as a through portion 53A. The through portion 53A is formed, thereby enabling the air to pass through from the lower portion to the upper portion, or from the upper portion to the lower portion, of the partition board 50A inside the casing 20. In other words, it can be said that the through portion 53A is a portion which passes through the partition board 50A and connects regions of the heat exchanger upstream space 22 below and above the partition board 50A.

One portion of the partition board extension portion 52 is positioned inside the duct section 13. The partition board extension portion 52 is formed in a downward gradient in the blow-in direction. The partition board extension portion 52 is gentler in gradient than the lower bottom surface 13Aa of the duct section 13A.

The first guide 60A is fixed to an upper surface 51Ab of the partition board 50A. The second guide 70A is fixed to a lower surface 51Aa of the partition board 50A. The air conditioning device 10A may be of any one of the aspect of including the first guide 60A and not including the second guide 70A, the aspect of not including the first guide 60A and including the second guide 70A, or the aspect of including both the first guide 60A and the second guide 70A.

The air conditioning device 10A described above also produces the predetermined advantageous effects of the present invention.

The ceiling surface 13Ab of the duct section 13 is configured in a downward gradient in the air flow direction. The air having flowed along the duct section 13A flows not only in the left and right direction but downward. This is because the air comes into contact with the upper surface 51Ab of the partition board 50A and it is difficult for the air to flow to the upper portion of the upper casing 20a. Here, the first guide 60A is provided in a portion of the upper surface 51Ab of the partition board 50 adjacent to the duct section 13, thereby enabling a change in the air flow direction to be smoothly carried out in a region of the heat exchanger upstream air 22, especially, above the partition board 50.

The lower bottom surface 13Aa of the duct section 13A is configured in a downward gradient, and the partition board 50A is configured having a gentler gradient than the lower bottom surface 13Aa. When the lower bottom surface 13Aa of the duct section 13 is formed having a downward gradient toward the casing 20, it is difficult for the air flow direction to change toward the heat exchanger 40, especially, in a space adjacent to the lower surface 51Aa of the partition board 50A, but the second guide 70 is provided in this kind of portion, thereby enabling a change in the air flow direction to be smoothly carried out in a region of the heat exchanger upstream space 22, especially, below the partition board 50.

### <Working Example 3>

Next, a description will be given, based on the drawings, of an air conditioning device 10B according to Working Example 3.

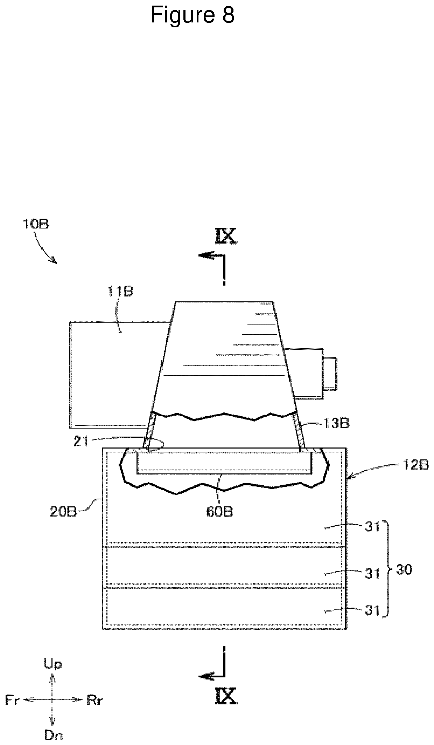

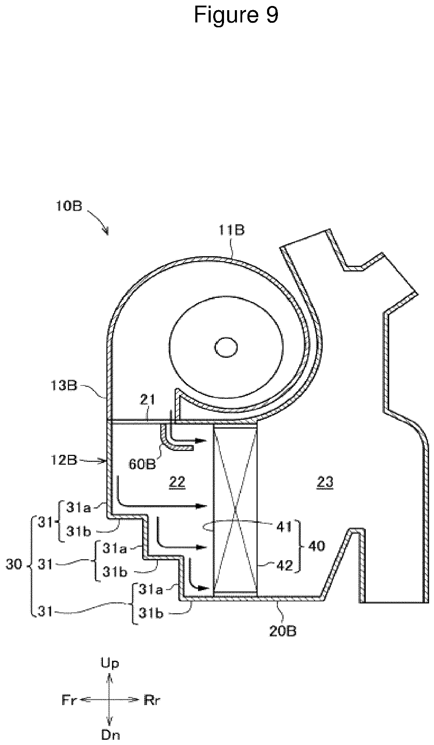

Figs. 8 and 9 will be referred to. The air conditioning device 10B according to Working Example 3 is different from the air conditioning device 10 according to Working Example 1 in that a blower section 11B, a duct section 13B, and a temperature adjustment section 12B are disposed so as to extend in the up and down direction. The other basic configurations are common to those of the air conditioning device 10 according to Working Example 1. The same signs will be used for portions common to those in Working Example 1, and a detailed description thereof will be omitted.

The air conditioning device 10B is such that the blower section 11B and the duct section 13B are formed integrally, and that the integrated blower section 11B and duct section 13B are disposed on the top of the temperature adjustment section 12B.

In a casing 20B, the air flowing downward from upward is caused to flow toward the rear of the vehicle.

A first guide 60B is configured so as to extend in the left and right direction.

The air conditioning device 10B described above also produces the predetermined advantageous effects of the present invention.

The individual working examples can also be combined appropriately. For example, one portion of the partition board of the air conditioning device having the duct section formed in an upward gradient toward the casing can be formed unfilled, thus forming a through portion. Also, the partition board in which the through portion is not formed can also be used for the partition board of the air conditioning device having the duct section formed in a downward gradient toward the casing. Furthermore, a plurality of the first guides can also be fixed to the upper surface of the partition board. Not limited to these examples, the individual working examples can be combined arbitrarily.

So long as the working and advantageous effects of the present invention are produced, the present invention is not limited to the working examples.

### Industrial Applicability

The air conditioning device of the present invention is suitable for being mounted on a passenger car.

### Reference Signs List

10, 10A, 10B ... vehicle air conditioning device
11, 11B ... blower section
12, 12A, 12B ... temperature adjustment section
13, 13A, 13B ... duct section
13a, 13Aa ... lower bottom surface
13b, 13Ab ... ceiling surface
20, 20B ... casing
20a ... upper casing
20b ... lower casing
22 ... heat exchanger upstream space
30 ... flow direction change section
31 ... step portion
40 ... heat exchanger
41 ... inflow surface
50, 50A ... partition board
51a, 51Aa ... lower surface
51b, 51Ab ... upper surface
60, 60A, 60B ... first guide (guide portion)
70, 70A ... second guide (guide portion)

## Claims

1. A vehicle air conditioning device, comprising:
a blower section (11; 11B) which blows air;
a temperature adjustment section (12; 12A; 12B) in which a heat exchanger (40) which heats or cools the air blown in from the blower section (11; 11B) is housed in a casing (20; 20B); and
a duct section (13; 13A; 13B) which leads the air to the temperature adjustment section (12; 12A; 12B) from the blower section (11), the device being **characterized in that**
the heat exchanger (40), including an inflow surface (41) positioned on the upstream side with reference to the flow direction of the air, carries out heat exchange with the air when the air having flowed in from the inflow surface (41) passes through the heat exchanger (40), that
the casing (20; 20B) has in a position thereof opposed to the inflow surface (41) a flow direction change section (30) which causes the flow direction of the air led to the temperature adjustment section (12; 12A; 12B) from the duct section (13; 13A; 13B) to bend approximately 90 degrees and leads the air to the inflow surface (41), and that
guide portions (60, 70; 60A, 70A; 60B) smaller in area than the flow direction change section (30) as seen when directly facing the inflow surface (41) is provided in a heat exchanger upstream space (22) between the inner wall surface of the casing (20; 20B) and the inflow surface (41).

2. The vehicle air conditioning device according to claim 1, **characterized in that**
the casing (20) is configured of an upper casing (20a) and a lower casing (20b) positioned below the upper casing (20a), that
a partition board (50; 50A) which partitions at least one portion of the heat exchanger upstream space (22) into an upper and a lower portion is provided between the upper casing (20a) and the lower casing (20b), and that
the guide portions (60, 70; 60A, 70A) are erected so as to extend in the up and down direction from an upper surface (51b; 51Ab) and/or a lower surface (51a; 51Aa) of the partition board (50; 50A).

3. The vehicle air conditioning device according to claim 2, **characterized in that**
the duct section (13) is connected to the upper casing (20a) and the lower casing (20b), that
a lower bottom surface (13a) of the duct section (13) is configured having an upward gradient when seen with reference to the flow direction of the air flowing through the duct section (13), and that
the guide portions (60, 70) include a first guide (60) fixed to the lower surface (51a) of the partition board (50) .

4. The vehicle air conditioning device according to claim 2 or 3, **characterized in that**
the duct section (13) is connected to the upper casing (20a) and the lower casing (20b), that
a ceiling surface (13b) of the duct section (13) is configured having an upward gradient when seen with reference to the flow direction of the air flowing through the duct section (13), and the partition board (50) is configured having a gentler gradient than the ceiling surface (13b), and that
the guide portions (60, 70) include a second guide (70) fixed to the upper surface (51b) of the partition board (50) .

5. The vehicle air conditioning device according to claim 2 or 3, **characterized in that**
the duct section (13A) is connected to the upper casing (20a) and the lower casing (20b), that
a ceiling surface (13Ab) of the duct section (13A) is configured having a downward gradient when seen with reference to the flow direction of the air flowing through the duct section (13A), and that
the guide portions (60A, 70A) include a first guide (60A) fixed to the upper surface (51Ab) of the partition board (50A) .

6. The vehicle air conditioning device according to claim 2 or 3, **characterized in that**
the duct section (13A) is connected to the upper casing (20a) and the lower casing (20b), that
a lower bottom surface (13Aa) of the duct section (13A) is configured having a downward gradient when seen with reference to the flow direction of the air flowing through the duct section (13A), and the partition board (50A) is configured having a gentler gradient than the lower bottom surface (13Aa), and that
the guide portions (60A, 70A) include a second guide (70A) fixed to the lower surface (51Aa) of the partition board (50A) .

7. The vehicle air conditioning device according to any one of claims 1 to 6, **characterized in that**
the flow direction change section (30) has a plurality of step portions (31) formed in steps, and that
at least one portion of the guide portions (60, 70; 60A, 70A; 60B) is positioned on the upstream side of the plurality of step portions (31) when seen with reference to the flow direction of the air flowing through the duct section (13; 13A; 13B) .
